# EUROPÄISCHE PATENTSCHRIFT

(11) **EP 3 328 639 B1**
(45) Veröffentlichungstag und Bekanntmachung des Hinweises auf die Patenterteilung: **03.06.2020**
(21) Anmeldenummer: 16747444.4
(22) Anmeldetag: 27.07.2016
(51) Int. Cl.: B32B 7/06, B32B 27/08, B32B 27/28, B32B 27/32, B65D 65/02, B65D 65/40, C08J 5/18, B32B 7/00, B32B 7/12, B65D 5/60, C08J 7/04, C09J 123/06, C09J 123/14, C09J 183/04, C08L 23/06, C08L 23/14

(54) **VERPACKUNGSFOLIE**
PACKAGING FILM
FILM D'EMBALLAGE

(30) Priorität: 28.07.2015 DE 102015009546; 28.07.2015 DE 102015017119
(43) Veröffentlichungstag der Anmeldung: 06.06.2018
(73) Patentinhaber: Loparex Germany GmbH & Co. KG, 91301 Forchheim (DE)
(72) Erfinder: SCHUHMANN, Michael, 90613 Großhabersdorf (DE); SITZMANN, Stefan, 91356 Kirchehrenbach (DE); ZIRKEL, Larissa, 91058 Erlangen (DE); GERLACHER, Harald, 96117 Memmelsdorf (DE); SCHMIDT, WERNER, 91301 Forchheim (DE)
(74) Vertreter: Kutzenberger Wolff & Partner
(86) Internationale Anmeldenummer: PCT/EP2016/001296
(87) Internationale Veröffentlichungsnummer: WO 2017/016661

(56) Entgegenhaltungen:
- EP-A1- 2 611 609
- WO-A1-2005/065945
- WO-A1-2012/113535

## Beschreibung

Die vorliegende Erfindung betrifft eine Einschlagsverpackung aus einer ungereckten, ggf. releasefähigen, wenigstens einschichtigen Polyolefinfolie umfassend
a) eine Schicht (a) basierend auf einer Mischung aus α) 20-49 Gew.-% eines Polypropylens und/oder wenigstens eines Propylencopolymeren und
   aus β) 80-51 Gew.-% wenigstens eines Polyethylens und/ oder Ethylencopolymeren, vorzugsweise mit einem Schmelzpunkt von wenigstens 113 °C und
   gegebenenfalls γ) üblichen Hilfsmittel, vorzugsweise Verarbeitungshilfsmittel, mit einer Schichtdicke von 6- ≤20 µm, und
b) ggf. auf wenigstens einer Oberfläche der Schicht (a) eine Releasebeschichtung (b) aus ausgehärtetem Polysiloxan und
c) gegebenenfalls auf wenigstens einer nicht belegten Oberfläche der Schicht (a) eine ggf. siegelbare Schicht (c) aus einem thermoplastischen Polymeren mit einem um mindestens 5 °C tieferen Schmelzpunkt als den Schmelzpunkt der Schicht (a),
wobei die Zugfestigkeit der Polyolefinfolie in Maschinenrichtung wenigstens 6,5 N/cm gemessen nach DIN EN ISO 527-3 beträgt und daraus hergestellte Einschlagverpackungen für vorzugsweise einzeln verpackte Hygieneprodukte oder einzeln verpackte Inkontinenzprodukte, die ggf. selbstklebefähig sind.

Es ist bekannt, dass Kunststofffolien für viele Anwendungen gebraucht werden, wobei der Einsatz von Kunststofffolien als Verpackungsmaterial einen beträchtlichen Anteil des Verbrauchs ausmacht. So ist auch insbesondere im Hygienebereich ein steigender Trend zum Verpacken von Hygiene-Artikeln für den Einmalgebrauch erkennbar,_da solche Hygieneartikel wie Slipeinlagen oder Damenbinden, aber auch Inkontinenzartikel in zunehmendem Maße einzeln verpackt werden. Damit steigt auch dafür der Bedarf an entsprechendem Verpackungsmaterial zunehmend. Da solches Verpackungsmaterial kaum recyclebar ist und damit keiner Wiederverwendung zugeführt werden kann, wird im verstärkten Maße versucht, auch für diese Verpackungsmaterialien möglichst wenig fossile Ressourcen in Anspruch zu nehmen. Dies bedeutet, dass für die Herstellung entsprechender Kunststofffolien als Verpackungsmaterial so wenig wie möglich von aus fossilen Rohstoffen gewonnenen Polymeren verwendet werden sollen, ohne dass aber bei den unverzichtbaren Qualitätsanforderungen an solche Kunststofffolien, insbesondere an deren mechanische Eigenschaften und anderen notwendigen, physikalischen Eigenschaften, Abstriche gemacht werden müssen.

Um bei der Herstellung von Einschlagverpackungen Polymermaterial einzusparen, ist es zunächst naheliegend, die Gesamtschichtdicke der Kunststofffolie zu verringern. Da damit aber üblicherweise eine zum Teil drastische Verminderung der mechanischen Eigenschaften, wie der Zugsfestigkeit, der Weiterreißfestigkeit und gegebenenfalls der Durchstoßfestigkeit einer solchen Kunststofffolie verbunden ist, wird die Handhabung während der Weiterverarbeitung der Kunststofffolie zur Einschlagverpackung beeinträchtigt, wodurch auch Produktionsstörungen auftreten können. Damit ist eine solche Möglichkeit zur Materialeinsparung mit nicht unerheblichen Risiken verbunden. Zusätzlich können auch bei dem Auftrag einer Release-Beschichtung oder eines Klebstoffs auf einer Kunststofffolie mit einer Gesamtschichtdicke von ≤ 20 µm meist wegen deren zu geringen thermischen Stabilität Schwierigkeiten auftreten.

Aufgabe der vorliegenden Erfindung war es daher, eine Einschlagverpackung basierend auf einer flexiblen Kunststofffolie zur Verfügung zu stellen, die trotz einer Reduzierung der Gesamtschichtdicke der Kunststofffolie auf unter 20 µm ausgezeichnete mechanische und ausreichende thermisch relevante Eigenschaften aufweist und eine weitestgehend störungsfreie Verarbeitung gewährleistet.

Diese Aufgabe wird durch das Zurverfügungstellen einer Einschlagverpackung aus einer ungereckten, ggf. releasefähigen, wenigstens einschichtigen Polyolefinfolie umfassend
a) eine Schicht (a) basierend auf einer Mischung aus α) 20-49 Gew.-% eines Polypropylens und/oder wenigstens eines Propylencopolymeren mit einer VICAT-Temperatur von wenigstens 130 °C (gemessen bei A50-50°C/10N) und
   aus β) 80-51 Gew.-% wenigstens eines Polyethylens und/oder Ethylencopolymeren, vorzugsweise mit einem Schmelzpunkt von wenigstens 113 °C und
   gegebenenfalls γ) üblichen Hilfsmittel, vorzugsweise Verarbeitungshilfsmittel,
   mit einer Schichtdicke von 6-≤ 20 µm, besonders bevorzugt 6-18 µm, und
b) ggf. auf wenigstens einer Oberfläche der Schicht (a) eine Releasebeschichtung (b) aus ausgehärtetem Polysiloxan und
c) gegebenenfalls auf wenigstens einer nicht belegten Oberfläche der Schicht (a) eine ggf. siegelbare Schicht (c) mit einer Schichtdicke von 4-10 µm aus einem thermoplastischen Polymeren mit einem um mindestens 5 °C tieferen Schmelzpunkt als den Schmelzpunkt der Schicht (a),
wobei die Zugfestigkeit der Polyolefinfolie in Maschinenrichtung wenigstens 6,5 N/cm gemessen nach DIN EN ISO 527-3 beträgt, gelöst.

In einer bevorzugten Ausführungsform besteht die erfindungsgemäße Einschlagverpackung nur aus einer einschichtigen Kunststofffolie mit einer Gesamtdicke von 6- ≤ 20 µm, besonders bevorzugt 6-18 µm, deren Schicht (a) vorzugsweise auf wenigstens einer ihrer Oberflächen eine Releasebeschichtung (b) aus ausgehärtetem Polysiloxan aufweist, wobei die Zugfestigkeit der Kunststofffolie in Maschinenrichtung wenigstens 6,5 N gemessen gemäß DIN ISO 527-3 beträgt.

In einer weiteren bevorzugten Ausführungsform kann die Kunststofffolie der erfindungsgemäßen Einschlagverpackung mehrschichtig, bevorzugt mindestens zweischichtig sein.

Gemäß dieser bevorzugten Ausführungsform besteht die erfindungsgemäße Einschlagverpackung aus einer mehrschichtigen Polyolefinfolie mit einem mindestens zweischichtigen Aufbau aus
der Schicht (a), die ggf. auf einer Oberfläche eine Releasebeschichtung (b) und auf ihrer anderen Oberfläche eine Schicht (c), die ggf. siegelfähig ist, aufweist.

Da die Releasebeschichtung höchstens eine Dicke von 1-2 µm aufweist, wird sie nicht als Schicht bezeichnet.

Gemäß einer weiteren bevorzugten Ausführungsform kann die erfindungsgemäße Einschlagverpackung auf einer 3-schichtigen Polyolefinfolie basieren, deren Schicht (a) auf jeder ihrer Oberflächen eine Schicht (c) basierend auf einem Polyolefin oder Olefincopolymeren aufweist, die jeweils eine Dicke von ≥ 4 µm haben und ggf. zumindest auf einer Schicht (c) eine Releasebeschichtung aufweist.

Vorzugsweise besteht die Polyolefinfolie der erfindungsgemäßen Einschlagverpackung zumindest zu 95 Gew.-% aus C₂-C₈-Olefinpolymeren, deren Mischungen oder Copolymeren in den vorstehend angegebenen jeweiligen Olefinanteilen oder Mischungsverhältnissen, wodurch Polyolefinfolien mit den vorstehend aufgeführten Merkmalen, wie z.B. Dicke, Zugfestigkeit, ggf. Weiterreißfestigkeit und Wärmestabilität zur Verfügung gestellt werden können.

Die Polyolefinfolie der erfindungsgemäßen Einschlagverpackung umfasst keine cyclischen Olefin-Polymere oder -Copolymere sowie kein Butylen-Homopolymeres oder -Copolymeres. Die Folie ist nicht gereckt.

Die erfindungsgemäße Einschlagverpackung umfasst auch keine Metalllage, d.h. keine Metallfolie oder durch Elektroden-Zerstäubung aufgebrachte Metallschicht.

Vorzugsweise basiert die Schicht (a) sowie die gegebenenfalls vorhandene Schicht (c) oder die Schichten (c) der Polyolefinfolie der erfindungsgemäßen Einschlagverpackung jeweils auf Polyolefinen und/oder Olefin-Copolymeren von α,β-ungesättigten Olefinen mit 2-8 Kohlenstoffatomen. Die Polyolefine sind bevorzugt ausgewählt aus der Gruppe umfassend Polyethylene (PE), vorzugsweise Polyethylene niedriger Dichte zwischen 0,86 und 0,93 g/cm³ (LDPE), lineare Polyethylene niedriger Dichte zwischen 0,86 und 0,94 g/cm³ (LLDPE), die neben Ethylen als Comonomer ein oder mehrere α-Olefine mit 4-8 Kohlenstoffatomen enthalten können, Polyethylene mittlerer Dichte zwischen 0,926 und 0,94 g/cm³ (MDPE), Polyethylene hoher Dichte zwischen 0,94 und 0,97 g/cm³ (HDPE), oder durch metallocen Katalyse polymerisierte Ethylen-Copolymere mit einem α-Olefin mit 4-8 Kohlenstoffatomen, vorzugsweise 6 und/oder 8 Kohlenstoffatomen, (mPE); Polypropylene (PP) oder Propylenethylen-Copolymere mit vorzugsweise bis zu 20 Gew.-% Ethylen. Bevorzugt ist als Mischungskomponente β) eine Mischungskomponente aus LLDPE, MDPE, HDPE oder eine Mischung aus LDPE mit LLDPE, MDPE oder HDPE zur Herstellung der Schicht (a) in einer Menge von 80-51 Gew.-%, vorzugsweise 75-55 Gew.-%, besonders bevorzugt 70 Gew.-% bis 60 Gew.-% bezogen auf das Gesamtgewicht der Mischung aus α) und β), die vorzugsweise einen Schmelzpunkt von wenigstens 113 °C aufweist.

In einer bevorzugten Mischungskomponente β) beträgt der Anteil des LDPE ≤ 85 Gew.-%, vorzugsweise 10-85 Gew.-% und der Anteil des LLDPE, MDPE oder HDPE ≥ 15 Gew.-%, vorzugsweise 90-15 Gew.-%, wobei vorzugsweise LLDPE als Mischungskomponente verwendet wird, um einen Schmelzpunkt von wenigstens 113 °C zu erreichen.

Entsprechend bevorzugte Mischungen aus einer solchen Mischungskomponente β) mit einer nachstehend aufgeführten Mischungskomponente α) ergeben vorzugsweise als Schicht a) eine Verpackungsfolie mit einer Weiterreißfestigkeit von wenigsten 0,18 N in MD, gemessen nach DIN 53356.

Die Mischung, aus der die Schicht (a) aufgebaut ist, enthält als Mischungskomponente α) 20-49 Gew.-%, vorzugsweise 25-45 Gew.-%, besonders bevorzugt 30-40 Gew.-%, bezogen auf das Gesamtgewicht der Mischung, wenigstens ein Polypropylen oder Propylencopolymeres. Als Polypropylen eignen sich vorzugsweise isotaktische Propylenhomopolymere mit einem Schmelzpunkt von 140-170 °C, vorzugsweise 150-165 °C. Weiterhin können als Propylencopolymere wenigstens ein Copolymeres von Propylen und bis zu 20 Gew.-%, vorzugsweise 10 Gew.-%, bezogen auf das Copolymer, Ethylen als Mischungskomponente α) eingesetzt werden.

Die Schicht (c), die ggf. auf wenigstens einer Oberfläche der Schicht (a) vorliegen kann, besteht vorzugsweise aus wenigstens einer Schicht aus einem Polyolefin, besonders bevorzugt aus wenigstens einem Polyethylen und/oder Ethylencopolymeren, wobei eine siegelbare Schicht (c) einen Schmelzpunkt aufweisen muss, der um mindestens 5 °C tiefer ist als der Schmelzpunkt der Schicht (a).

In einer bevorzugten Ausführungsform besteht die ggf. vorhandene Schicht (c) bzw. die Schichten (c), gleich oder verschieden, aus der Polymerkomponente β) der Polymermischung, aus der die Schicht (a) aufgebaut ist.

Die Schicht(en) der Polyolefinfolie der erfindungsgemäßen Einschlagverpackung können jeweils dieselben oder unterschiedliche Additive bzw. Hilfsmittel ausgewählt aus der Gruppe umfassend Antioxidantien, Antiblockmittel, Antifogmittel, Antistatika, antimikrobielle Wirkstoffe, Lichtschutzmittel, UV-Absorber, UV-Filter, Farbstoffe, Farbpigmente, Stabilisierungsmittel, vorzugsweise Hitze-Stabilisatoren, Prozess-Stabilisatoren und UV- und/oder Licht-Stabilisatoren, vorzugsweise basierend auf wenigstens einem sterisch gehinderten Amin (HALS), Prozesshilfsmittel, Flammschutzmittel, Nukleierungsmittel, Kristallisationsmittel, vorzugsweise Kristallkeimbildner, Gleitmittel, optische Aufheller, Weichmacher, Silane, Abstandshalter, Füllstoffe, wie CaCO3, Silikate, Peel-Additive, Siegel-Additive, Wachse, Benetzungsmittel, oberflächenaktive Verbindungen, vorzugsweise Tenside, und Dispergiermittel aufweisen.

Die Schichten der erfindungsgemäß zum Einsatz kommenden Kunststofffolie können wenigstens 0,01-15 Gew.-%, vorzugsweise wenigstens 0,1-10 Gew.-%, jeweils bezogen auf das Gesamtgewicht einer einzelnen Schicht, wenigstens eines der vorstehend genannten Additive enthalten.

Jede der Schichten (c), falls vorhanden, weist, gleich oder verschieden, eine Schichtdicke von 4-10 µm auf.

Die Verpackungsfolie der erfindungsgemäßen Einschlagverpackung kann zur Verbesserung ihrer Trennwirkung auch eine Releasebeschichtung (b) auf einer ihrer Oberflächen oder einer ihrer Außenschichten aufweisen.

Vorzugsweise basiert die Releasebeschichtung (b) auf einer ausgehärteten Polysiloxan-Beschichtung, die auf wenigstens einer Oberfläche der Verpackungsfolie im Wesentlichen vollflächig, vorzugsweise mit Ausnahme bis auf wenigstens einen in Maschinenrichtung verlaufenden Streifen oder teilflächig, vorzugsweise als rapportgenauer Querstreifen aufgetragen wird.

Unter dem Begriff "Polysiloxan" werden im Sinne der vorliegenden Erfindung Verbindungen verstanden, deren Polymerketten abwechselnd aus Silicium- und Sauerstoffatomen aufgebaut sind. Ein Polysiloxan basiert auf n wiederkehrenden Siloxan-Einheiten (-[Si(R₂)-O]-)ₙ, welche jeweils unabhängig voneinander mit zwei organischen Resten R disubstituiert sind, wobei R vorzugsweise jeweils für R¹ oder OR¹ steht und R¹ jeweils für einen Alkyl-Rest oder einen Aryl-Rest steht. Vorzugsweise basiert die ausgehärtete Polysiloxan-Beschichtung auf einer wiederkehrenden Dialkylsiloxan-Einheit oder auf einer wiederkehrenden Alkylaryl-Siloxan-Einheit. Je nachdem, wie viele Si-O-Bindungen eine einzelne Siloxan-Einheit, jeweils bezogen auf ein vierwertiges Siliciumatom, aufweist, lassen sich diese Einheiten in endständige monofunktionelle Siloxane (M) mit einer Si-O-Bindung, difunktionelle Siloxane (D) mit zwei Si-O-Bindungen, trifunktionelle Siloxane (T) mit drei Si-O-Bindungen und tetrafunktionelle Siloxane (Q) mit vier Si-O-Bindungen unterscheiden. Vorzugsweise weist die erfindungsgemäße Polysiloxan-Beschichtung eine vernetzte ring- oder kettenförmige, besonders bevorzugt eine vernetzte kettenförmige Struktur auf, welche durch (D)-, (T)-, und/oder (Q)-Einheiten zu einem zwei-oder dreidimensionalen Netzwerk verknüpft ist. Die Anzahl n der wiederkehrenden Siloxan-Einheiten [Si(R₂)-O]-)ₙ in der Polysiloxankette wird als Polymerisationsgrad des Polysiloxans bezeichnet.

Die ausgehärtete Polysiloxan-Beschichtung (b) der Verpackungsfolie basiert vorzugsweise auf wenigstens einem ausgehärteten, d.h. vernetzten Polysiloxan ausgewählt aus der Gruppe umfassend additionsvernetzte, vorzugsweise metallkatalysiert additionsvernetzte, kondensationsvernetzte, radikalisch vernetzte und/oder kationisch vernetzte Polysiloxane.

Besonders bevorzugt basiert die Polysiloxan-Beschichtung auf wenigstens einem ausgehärteten Polysiloxan, das durch thermische Aushärtung und/oder unter Einwirkung von UV-Strahlung, ausgehärtet wurde. Bevorzugt basiert die Polysiloxan-Beschichtung (b) auf wenigstens einem ausgehärteten Polysiloxan ausgewählt aus der Gruppe umfassend Polydialkylsiloxane, vorzugsweise Polydimethylsiloxane, und Polyalkylarylsiloxane, vorzugsweise Polymethylphenylsiloxane, die jeweils ausgehärtet sind. Thermisch ausgehärtete Polysiloxane können durch thermische Hydrosilylierung von Silan-Funktionen aufweisenden Polysiloxanen mit einer zumindest eine Kohlenstoff-Doppelbindung aufweisenden Verbindung erhalten werden. Die UV-Aushärtung erfolgt wie thermische Aushärtung nach der Herstellung der Verpackungsfolie, wobei eine UV-Aushärtung erfindungsgemäß bevorzugt ist.

Prinzipiell kann die Herstellung der Verpackungsfolie für die erfindungsgemäße Einschlagverpackung nach bekannten Herstellungsverfahren wie z.B. durch Extrusion oder durch Co-Extrusion erfolgen.

Dabei kann die einschichtige oder können sowohl einzelne als auch sämtliche Schichten der mehrschichtigen Polyolefinfolie durch Extrusion, insbesondere durch Blasfolien-Extrusion und/oder Flachfolien-Extrusion (Cast-Extrusion), oder Co-Extrusion, vorzugsweise Blasfolien-Co-Extrusion und/oder Flachfolien-Co-Extrusion (Cast-Co-Extrusion) hergestellt werden, wobei Blasfolien-(Co)-Extrusion bevorzugt ist. Dabei ist zu beachten, dass im Fall einer Dotierung der Schicht (a) oder der ggf. weiteren vorhandenen Schichten mit Additiven, diese durch Abmischen, ggf. als Masterbatch, mit der oder den Polymer-Komponente(n) der jeweiligen Schicht zur Verarbeitung eingesetzt werden. Dieses Abmischen kann in Granulat/Pulver- oder Granulat/Granulat-Form trocken erfolgen. Es ist aber auch möglich, das Additiv dem oder den aufgeschmolzenen Polymer-Komponente(n) der jeweiligen Schicht zuzugeben, vorzugsweise durch Zudosierung in einem für die Extrusion der jeweiligen Schicht verwendeten Extruder.

Bei der Herstellung durch Extrusion wird die einschichtige bzw. werden die den einzelnen Schichten der Polyolefinfolie entsprechenden Schmelzen gleichzeitig und gemeinsam durch eine Runddüse oder eine Flachdüse (co)extrudiert, die so erhaltene Folie bei Nutzung einer Runddüse mittels Luft aufgeblasen und gekühlt oder bei Nutzung einer Flachdüse zur Verfestigung mit Hilfe von Walzen abgezogen und gekühlt.

Anschließend kann auf zumindest eine Oberfläche der Polyolefin-Folie gegebenenfalls nach Zwischenlagerung eine Releasebeschichtung aufgetragen werden.

Die Verpackungsfolie der erfindungsgemäßen Einschlagverpackung kann geprägt sein und eine einseitige Prägestruktur auf einer ihrer Oberflächen-Schichten oder eine durchgehende Prägestruktur, mit einer entsprechenden männlichen und weiblichen Seite, aufweisen.

Die Prägung der Verpackungsfolie kann im Flachfolien-Extrusionsverfahren einseitig inline hergestellt werden. Dabei wird die Polymerschmelze durch den Düsenspalt auf eine strukturierte, gekühlte Walze aufgegossen und mittels Gegenwalzen zu einer Folie geformt. Die strukturierte Walze überträgt ihre Struktur nur auf die eine Seite der Folie.

Die Prägung der Verpackungsfolie kann im Blasfolien-Extrusionsverfahren durchgehend inline hergestellt werden. Dabei wird die Folie vorgeheizt durch einen Prägespalt zwischen einer strukturierten gekühlten Stahlwalze und einer unstrukturierten Gummiwalze gezogen. Die Stahlwalze überträgt die Struktur der Stahlwalze auf die Stahlwalzenseite der Folie, wobei sich dabei durch die elastische Gummiwalze auf der Gegenseite auf der Gummiwalzenseite eine negative Struktur der Struktur der Stahlwalze abbildet.

Die Prägung der Verpackungsfolie kann auch nach dem Blasfolien-Extrusionsverfahren oder Flachfolien-Extrusionsverfahren offline durchgehend hergestellt werden. Dabei wir die Folie in einem weiteren Verfahrensschritt vorgeheizt durch einen Prägespalt zwischen einer strukturierten, gekühlten Stahlwalze und einer unstrukturierten Gummiwalze gezogen. Die Stahlwalze überträgt die Struktur der Stahlwalze auf die Stahlwalzenseite der Folie, wobei sich dabei durch die elastische Gummiwalze auf der Gegenseite auf der Gummiwalzenseite eine negative Struktur der Struktur der Stahlwalze abbildet.

Die Erstellung der einzuprägenden Struktur erfolgt nach den dem Fachmann bekannten und üblichen Verfahren, wobei je nach Struktur und Materialien spezifische Verfahren besonders vorteilhaft sein können. Grundsätzlich können die Strukturen auf der Prägewalze entweder eine durchgehende Struktur haben oder aber als unterbrochene Struktur (Abfolge von Einzelprägestrukturen) ausgebildet sein, wobei auch eine Kombination beider Strukturen möglich ist. Die jeweiligen Strukturen auf der Prägewalze können die unterschiedlichsten geometrischen Formen aufweisen, je nach beabsichtigter (asymmetrischer) Struktur der Kunststofffolie. Dabei ist eine regelmäßige Struktur bevorzugt.

Die ungereckte Polyolefinfolie der erfindungsgemäßen Einschlagverpackung weist darüber hinaus eine ausgezeichnete Zugfestigkeit, ein gutes bis sehr gutes Weiterreißverhalten sowie eine ausgezeichnete Wärmeresistenz und ein geringes Schrumpfverhalten auf

Die Wärmeresistenz der Polyolefinfolie führt vorzugsweise zu einem Schrumpf in MD bzw. CD, gemessen nach DIN 55543-4 bei 100°C und 1min im Ölbad von jeweils ≤ 10%, vorzugsweise ≤ 8 %.

Dadurch gelingt es, auf die Verpackungsfolie trotz geringer Gesamtschichtdicke den notwendigen Auftrag von geschmolzenen Klebstoff passgenau aufzutragen, die Release-Beschichtung durchzuführen und unter den üblichen hohen Verarbeitungsgeschwindigkeiten der Verpackungsmaschinen ohne nennenswerte Störung weiter zu verarbeiten.

Dementsprechend liegt die erfindungsgemäße Einschlagverpackung als eine vorzugsweise ablösbare Einschlagverpackung, vorzugsweise für ggf. selbstklebefähigen Hygieneartikel, vorzugsweise Damenbinden Slipeinlagen oder Inkontinenzartikel vor, die vorzugsweise einzeln verpackt in der erfindungsgemäßen Einschlagverpackung vorliegen.

Dafür bringt die erfindungsgemäßeEinschlagverpackung den Vorteil mit, dass sie eine geräuscharm zu handhabende Verpackung, insbesondere für einzeln verpackte Hygieneprodukte darstellt. Dabei beträgt die Geräuschentwicklung bei der Handhabung ≤ 60 [db] gemessen als äquivalenter Dauerschallpegel L_{eq} [db].

### A. Messung des Geräuschaufkommens

Zur Bestimmung des äquivalenten Dauerschallpegels wird eine Folienprobe in der Größe von DIN A5 an jeder Längsseite mittig und horizontal mit Hilfe einer Klammervorrichtung fixiert. Eine der Klammervorrichtungen ist nicht beweglich, während die andere Vorrichtung zur Erzeugung von Geräuschen durch fortlaufendes Stauchen und Strecken der Folienprobe auf einer exzentrischen Bahn bewegt werden kann. Die Drehzahl des exzentrischen Antriebs beträgt während der Messung 36 min⁻¹. Als Geräuschemissionskenngröße wird der äquivalente Dauerschallpegel L_{eq} [db] mit Hilfe eines Schallaufnahmegeräts ermittelt, das im Abstand von 30 cm von der Mitte der Breitseite der DIN A5 Folienprobe für die Dauer von 30 Sekunden die Geräusche beim fortlaufenden Stauchen und Strecken der Folienprobe aufnimmt. Die Folienprobe darf während des Streckens und Stauchens nicht beschädigt werden. Als Messgerät wird ein Messgerät von Brüel & Kjaer, 2250-L, eingesetzt.

### B. Methode zur Schrumpfmessung

Die Messung des Schrumpfes erfolgt nach DIN 55543-4. Daher werden jeweils 10 Proben à 100 mm x 100mm mit jeweils markierter Laufrichtung in Maschinenrichtung bzw. quer zur Maschinenrichtung in einem hochsiedenden Ölbad von 100 °C jeweils 1 min belassen, der jeweilige Mittelwert der Längenänderung in die MD bzw. in die CD von den jeweiligen 10 Proben gemittelt und die jeweilige Änderung als % Schrumpf angegeben.

### C. Messung der Zugfestigkeit

Von jeder Monofolie, (einschichtige Folie), die aus den in der Tabelle II A bzw. B angegebenen Polymermischungen und jeweils 4,7 Gew.-% von üblichen Verarbeitungshilfsmitteln hergestellt wurden, wurde die Zugfestigkeit in Maschinenrichtung (MD) und quer zur Maschinenrichtung (CD) nach DIN EN ISO 527-3 (angepasst) bestimmt.

Bei einer Probenbreite von 25 mm wurde bei einer Messgeschwindigkeit von 500 mm/min die maximale Kraft in N bestimmt und auf die Einheit N/cm umgerechnet.

### D. Messung der Dicke

Die Messung der Dicke der jeweiligen Monofolie wurde nach DIN 53370 ermittelt und als Mittelwert angegeben.

### E. Messung der Weiterreißfestigkeit

Die Messung der Weiterreißfestigkeit von jeder Monofolie erfolgte nach DIN 53 356, wobei die Messung an einer Probengröße von 100 mm x 50 mm mit einer Messgeschwindigkeit von 300 mm/min über eine Messlänge von 30 mm durchgeführt wurde und die Initialwerte bei der Auswertung vernachlässigt wurden. Es wurde die Weiterreißfestigkeit in Maschinenrichtung (MD) als auch quer zur Maschinenrichtung (CD) ermittelt.

Die sowohl in Maschinenrichtung (MD) als auch quer zur Maschinenrichtung (**CD**) ermittelten Werte sowohl für die Zugfestigkeit als auch für die Weiterreißfestigkeit wurden in den nachfolgenden Tabelle IIA und IIB jeweils für die entsprechende Polymermischung, aus der die Monofolie hergestellt wurde, angegeben.

### I. Chemische Charakterisierung der eingesetzten Rohstoffe:

**TABELLE I**

| Bezeichnung | Beschreibung | Schmelzpunkt Tm [°C] | Vicat Tm [°C] | Dichte [g/cm3] |
|---|---|---|---|---|
| LDPE | low density polyethylene | 111 | | 0,923 |
| LLDPE I | metallocene ethylene-hexene copolymer | 114 | | 0,92 |
| LLDPE II | metallocene ethylene-hexene copolymer | 119 | | 0,927 |
| MDPE | medium density polyethylene | 127 | | 0,935 |
| HDPE | high density polyethylene | 132 | | 0,946 |
| PP homo | Polypropylen homopolymer | 164 | 150 | 0,9 |
| PP copo | Propylen/Ethylen-Copolymer mit 15 Gew.-% Ethylen | 163 | 155 | 0,9 |
| Additve | Verarbeitungshilfsmittel | | | |

### II: Herstellung der erfindungsgemäß eingesetzten Polyolefinfolien (B) sowie der Vergleichsfolien

Aus den in der nachfolgenden Tabellen IIA und IIB aufgeführten Polymermischungen aus unterschiedlichen Polyethylen bzw. Polyethylenmischungen und einem jeweils identischen Polypropylen (PP homo) oder Propylen//Ethylen Copolymeren (PPcopo) wurden in den in der Tabelle II aufgeführten Mischungsverhältnissen einschichtige Folien (Monofolien) mit jeweils einer identischen Dicke von 16 µm nach einem konventionellen Blasfolienextrusionsverfahren hergestellt. Die Mischungsverhältnisse sind ebenfalls in den Tabellen IIA bzw. IIB als Gewichtsprozente, bezogen auf die Gesamtmischung, angegeben. Jede Mischung enthielt 4,7 Gew.-%, bezogen auf die Gesamtmischung, von üblichen Verarbeitungshilfsmitteln.

**TABELLE II A**

| | **PE** | | **PP homo** | **Zugfestigkeit** | | **Weiterreißfestigkeit** | |
|---|---|---|---|---|---|---|---|
| | **Art** | **Gew.-%** | **Gew.-%** | **[N/cm]** | | **[N]** | |
| | | | | **MD** | **CD** | **MD** | **CD** |
| V | LDPE | 90,5 | 4,8 | 5,04 | 3,04 | 0,1 | 1,32 |
| V | LDPE | 80,5 | 14,8 | 5,64 | 3,20 | 0,07 | 1,60 |
| V | LDPE | 65,3 | 30,0 | 6,46 | 3,48 | 0,14 | 1,32 |
| B | LDPE | 55,3 | 40,0 | 7,04 | 8,80 | 0,17 | 0,60 |
| V | LLDPE I | 80,5 | 14,8 | 5,92 | 5,44 | 0,52 | 2,25 |
| B | LLDPE I | 65,3 | 30,0 | 8,65 | 4,84 | 0,48 | 2,48 |
| V | LLDPE II | 80,5 | 14,8 | 5,36 | 4,24 | 0,68 | 2,26 |
| B | LLDPE II | 65,3 | 30,0 | 7,24 | 4,44 | 0,46 | 2,34 |
| B | HDPE | 75,3 | 20,0 | 7,88 | 3,64 | 0,87 | 3,61 |
| B | HDPE | 65,3 | 30,0 | 9,52 | 4,32 | 0,67 | 3,64 |

| | | | | | | | |
|---|---|---|---|---|---|---|---|
| V= Vergleichsbeispiel B= erfindungsgemäßes Beispiel | | | | | | | |

**TABELLE II B**

| | **PE** | | **PP copo** | **Zugfestigkeit** | | **Weiterreißfestigkeit** | |
|---|---|---|---|---|---|---|---|
| | **Art** | **Gew.-%** | **Gew.-%** | **[N/cm]** | | **[N]** | |
| | | | | **MD** | **CD** | **MD** | **CD** |
| V | LDPE | 90,5 | 4,8 | 5,04 | 2,64 | 0,14 | 1,28 |
| V | LDPE | 80,5 | 14,8 | 5,08 | 3,08 | 0,12 | 1,56 |
| B | LDPE | 65,3 | 30,0 | 6,64 | 4,20 | 0,15 | 1,47 |
| B | LDPE | 55,3 | 40,0 | 6,92 | 4,32 | 0,10 | 1,78 |
| V | LLDPE I | 80,5 | 14,8 | 6,28 | 4,48 | 0,57 | 1,94 |
| B | LLDPE I | 65,3 | 30,0 | 7,64 | 4,56 | 0,56 | 2,36 |
| B | LLDPE II | 75,3 | 20,0 | 7,20 | 3,60 | 0,67 | 2,39 |
| B | LLDPE II | 65,3 | 30,0 | 8,52 | 4,04 | 0,49 | 2,65 |
| B | HDPE | 75,3 | 20,0 | 8,80 | 4,20 | 0,97 | 3,56 |
| B | HDPE | 65,3 | 30,0 | 9,36 | 4,28 | 0,40 | 1,03 |

| | | | | | | | |
|---|---|---|---|---|---|---|---|
| V= Vergleichsbeispiel B= erfindungsgemäßes Beispiel | | | | | | | |

### III. Resultate

Die in den Tabellen II A und II B aufgeführten Ergebnisse zeigen, dass der Einsatz von Mischungen enthaltend eine Komponente β) aus Polyethylenen und/oder Ethylencopolymere mit einem Schmelzpunkt ≥ 113 °C in erfindungsgemäßen Mischungsbereichen mit einer Komponente α) enthaltend Polypropylen oder Propylencopolymere zu Verpackungsfolien führt, deren Zugfestigkeit ≥ 6,5 N/cm und deren Weiterreißfestigkeit vorzugsweise ≥ 0,18 in Maschinenrichtung beträgt. Außerdem konnte festgestellt werden, dass solche Monofolien nur zur einer ≤ 60 Dezibel Geräuschentwicklung bei der Handhabung einer aus solchen Verpackungsfolien hergestellten Einschlagverpackungen führen. Darüber hinaus zeigen die Verpackungsfolien eine ausreichend hohe Hitzeresistenz, die eine reibungslose Beschichtung mit heißem Klebstoff erlaubt, wie die nach der angegebenen Methode gemessenen Schrumpfwerte in MD bzw. CD von ≤ 10 % belegen.

## Patentansprüche

1. Eine Einschlagverpackung aus einer ungereckten, ggf. releasefähigen, wenigstens einschichtigen Polyolefinfolie umfassend
a) eine Schicht (a) mit einer Schichtdicke von 6 - ≤20 µm,
basierend auf einer Mischung aus α) 20-49 Gew.-% eines Polypropylens und/oder wenigstens eines Propylencopolymeren mit einer VICAT-Temperatur von wenigsten 130 °C (gemessen bei A50-50°C/10 N) und
aus β) 80-51 Gew.-% wenigstens eines Polyethylens und/oder Ethylencopolymeren, vorzugsweise mit einem Schmelzpunkt von wenigstens 113 °C, und
gegebenenfalls γ) üblichen Hilfsmittel, vorzugsweise Verarbeitungshilfsmittel, und
b) ggf. auf wenigstens einer Oberfläche der Schicht (a) eine Releasebeschichtung (b) aus ausgehärtetem Polysiloxan
und
c) gegebenenfalls auf wenigstens einer nicht belegten Oberfläche der Schicht (a) eine ggf. siegelbare Schicht (c) mit einer Schichtdicke von 4-10 µm aus einem thermoplastischen Polymeren mit einem um mindestens 5 °C tieferen Schmelzpunkt als den Schmelzpunkt der Schicht (a),
wobei die Zugfestigkeit der Polyolefinfolie in Maschinenrichtung wenigstens 6,5 N/cm gemessen nach DIN EN ISO 527-3 beträgt.

2. Eine Einschlagverpackung nach Anspruch 1, **dadurch gekennzeichnet, dass** die Schicht (a) der Polyolefinfolie auf einer Mischung aus 25-45 Gew.-%, vorzugsweise 30-40 Gew.-%, der Polymerkomponente α) und 55-75 Gew.-%, vorzugsweise 60-70 Gew.-%, der Polymerkomponente β), jeweils bezogen auf 100 Gew.-% der Mischung, basiert.

3. Eine Einschlagverpackung nach Anspruch 1 oder 2, **dadurch gekennzeichnet, dass** die Polymerkomponente α) der Schicht (a) der Polyolefinfolie eine VICAT-Temperatur von wenigstens 140 °C, bevorzugt von wenigsten 150 °C (gemessen bei A50-50°C/10 N) aufweist.

4. Eine Einschlagverpackung nach einem der Ansprüche 1 bis 3, **dadurch gekennzeichnet, dass** die Schicht (a) der Polyolefinfolie als Polymerkomponente α) wenigstens ein Propylencopolymeres, vorzugsweise ein Propylenethylencopolymeres mit vorzugsweise bis zu 20 Gew.-% Ethylen aufweist.

5. Eine Einschlagverpackung nach einem der Ansprüche 1 bis 4, **dadurch gekennzeichnet, dass** die Schicht (a) der Polyolefinfolie als Polymerkomponente β) wenigstens ein Polyethylen ausgewählt aus der Gruppe umfassend Polyethylene niedriger Dichte (LDPE), lineare Polyethylene niedriger Dichte (LLDPE), metallocen Copolymere von Ethylen mit wenigstens einem C₃-C₈ α-Olefin (metallocen PE) und Mischungen aus wenigstens zwei der genannten Polymeren aufweist.

6. Eine Einschlagverpackung nach einem der Ansprüche 1 bis 5, **dadurch gekennzeichnet, dass** die Polymerkomponente β) der Schicht (a) der Polyolefinfolie aus wenigstens einem LLDPE oder einer Mischung aus LDPE und LLDPE oder aus einer Mischung aus LDPE und metallocen PE besteht, wobei der Anteil des LLDPE bzw. des metallocen Polyethylens wenigstens 15 Gew.-% in der Mischung beträgt und die Mischung einen Schmelzpunkt von ≥ 113 °C aufweist.

7. Eine Einschlagverpackung nach Anspruch 6, **dadurch gekennzeichnet, dass** die Weiterreißfestigkeit der Polyolefinfolie ≥ 0,18 N in Maschinenrichtung (gemessen nach DIN 53356) beträgt.

8. Eine Einschlagverpackung nach einem der Ansprüche 1 bis 7, **dadurch gekennzeichnet, dass** die ggf. vorhandene Oberflächenschicht (c) der Polyolefinfolie aus wenigstens einem Polyethylen und/oder Ethylencopolymeren mit wenigstens einem C₃-C₈ α-Olefin, vorzugsweise aus einer Mischung aus LDPE und einem LLDPE aufgebaut ist.

9. Eine Einschlagverpackung nach einem der Ansprüche 1 bis 8, **dadurch gekennzeichnet, dass** die Polyolefinfolie eine Releasebeschichtung (b) aus einem UV-ausgehärteten oder thermisch ausgehärteten Polysiloxan aufweist.

10. Eine Einschlagverpackung nach einem der Ansprüche 1 bis 9, **dadurch gekennzeichnet, dass** der Schrumpf der Polyolefinfolie in MD bzw. CD gemessen nach DIN 55543 bei 100°C und 1 min im Ölbad ≤ 10% beträgt.

11. Eine Einschlagverpackung nach einem der Ansprüche 1 bis 10, **dadurch gekennzeichnet, dass** die Einschlagverpackung eine ablösbare Einschlagverpackung ist.

12. Eine Einschlagverpackung nach Anspruch 11, **dadurch gekennzeichnet, dass** die ablösbare Verpackung eine Verpackung für individuell verpackte Hygieneartikel ist.

13. Eine Einschlagverpackung nach Anspruch 11 oder 12, **dadurch gekennzeichnet, dass** es sich bei den Hygieneartikeln, um einzeln verpackte Inkontinenzartikel, Slipeinlagen oder Damenbinden handelt.

14. Eine Einschlagverpackung nach Anspruch 13, **dadurch gekennzeichnet, dass** das Hygieneprodukt selbstklebefähig ist.

## Claims

1. Wrapper made of an unstretched at least single-layer polyolefin film which optionally has release properties, comprising
a) a layer (a) with a layer thickness of 6 - ≤20 µm,
based on a mixture of α) 20-49% by weight of a polypropylene and/or of at least one propylene copolymer with a VICAT temperature of at least 130°C (measured by method A50-50°C/10 N) and
of β) 80-51% by weight of at least one polyethylene and/or ethylene copolymer, preferably with a melting point of at least 113°C, and
optionally of γ) conventional auxiliaries, preferably processing aids, and
b) optionally on at least one surface of the layer (a) a release coating (b) made of hardened polysiloxane
and
c) optionally on at least one uncovered surface of the layer (a) an optionally sealable layer (c) with a layer thickness of 4-10 µm made of a thermoplastic polymer with a melting point lower by at least 5°C than the melting point of the layer (a),
where the tensile strength of the polyolefin film in machine direction is at least 6.5 N/cm, measured in accordance with DIN EN ISO 527-3.

2. Wrapper according to Claim 1, **characterized in that** the layer (a) of the polyolefin film is based on a mixture of 25-45% by weight, preferably 30-40% by weight, of the polymer component α) and 55-75% by weight, preferably 60-70% by weight, of the polymer component β), based in each case on 100% by weight of the mixture.

3. Wrapper according to Claim 1 or 2, **characterized in that** the VICAT temperature of the polymer component α) of the layer (a) of the polyolefin film is at least 140°C, preferably at least 150°C (measured by method A50-50°C/10 N).

4. Wrapper according to any of Claims 1 to 3, **characterized in that** the layer (a) of the polyolefin film comprises, as polymer component α), at least one propylene copolymer, preferably a propylene-ethylene copolymer with preferably up to 20% by weight of ethylene.

5. Wrapper according to any of Claims 1 to 4, **characterized in that** the layer (a) of the polyolefin film comprises, as polymer component β), at least one polyethylene selected from the group comprising low-density polyethylenes (LDPE), linear low-density polyethylenes (LLDPE), metallocene copolymers of ethylene with at least one C₃-C₈ α-olefin (metallocene PE) and mixtures of at least two of the polymers mentioned.

6. Wrapper according to any of Claims 1 to 5, **characterized in that** the polymer component β) of the layer (a) of the polyolefin film consists of at least one LLDPE or of a mixture of LDPE and LLDPE or of a mixture of LDPE and metallocene PE, where the proportion of the LLDPE and, respectively, of the metallocene polyethylene is at least 15% by weight in the mixture and the melting point of the mixture is ≥ 113°C.

7. Wrapper according to Claim 6, **characterized in that** the tear-propagation resistance of the polyolefin film in machine direction is ≥ 0.18 N (measured in accordance with DIN 53356).

8. Wrapper according to any of Claims 1 to 7, **characterized in that** the optionally present surface layer (c) of the polyolefin film is composed of at least one polyethylene and/or ethylene copolymer with at least one C₃-C₈ α-olefin, preferably of a mixture of LDPE and of an LLDPE.

9. Wrapper according to any of Claims 1 to 8, **characterized in that** the polyolefin film has a release coating (b) made of a UV-hardened or thermally hardened polysiloxane.

10. Wrapper according to any of Claims 1 to 9, **characterized in that** the shrinkage of the polyolefin film in MD and, respectively, CD measured in accordance with DIN 55543 under conditions of 100°C and 1 min in the oil bath is ≤ 10%.

11. Wrapper according to any of Claims 1 to 10, **characterized in that** the wrapper is a peelable wrapper.

12. Wrapper according to Claim 11, **characterized in that** the peelable packaging is a packaging for individually packed hygiene items.

13. Wrapper according to Claim 11 or 12, **characterized in that** the hygiene items are individually packed incontinence items, panty liners or sanitary towels.

14. Wrapper according to Claim 13, **characterized in that** the hygiene product has self-adhesive properties.

## Revendications

1. Emballage pliable composé d'une feuille de polyoléfine non étirée, éventuellement détachable, au moins monocouche comprenant
a) une couche (a) dotée d'une épaisseur de couche de 6 à ≤ 20 µm,
à base d'un mélange de α) 20 à 49 % en poids d'un polypropylène et/ou d'au moins un copolymère de propylène doté d'une température Vicat d'au moins 130 °C (mesurée à A50 à 50 °C/10 N) et
β) 80 à 51 % en poids d'au moins un polyéthylène et/ou copolymère d'éthylène, de préférence doté d'un point de fusion d'au moins 113 °C, et éventuellement γ) des auxiliaires habituels, de préférence des auxiliaires de traitement, et
b) éventuellement, sur au moins une surface de la couche (a), un revêtement détachable (b) composé de polysiloxane durci et
c) éventuellement, sur au moins une surface non recouverte de la couche (a), une couche (c) éventuellement scellable dotée d'une épaisseur de couche de 4 à 10 µm composée d'un polymère thermoplastique doté d'un point de fusion d'au moins 5 °C plus bas que le point de fusion de la couche (a),
la résistance à la traction de la feuille de polyoléfine dans le sens machine étant d'au moins 6,5 N/cm, mesurée d'après la norme DIN EN ISO 527-3.

2. Emballage pliable selon la revendication 1, **caractérisé en ce que** la couche (a) de feuille de polyoléfine est à base d'un mélange de 25 à 45 % en poids, de préférence 30 à 40 % en poids, du composant de polymère α) et 55 à 75 % en poids, de préférence 60 à 70 % en poids, du composant de polymère β), à chaque fois par rapport à 100 % en poids du mélange.

3. Emballage pliable selon la revendication 1 ou 2, **caractérisé en ce que** le composant de polymère α) de la couche (a) de la feuille de polyoléfine présente une température Vicat d'au moins 140 °C, préférablement d'au moins 150 °C (mesurée à A50 à 50 °C/10 N).

4. Emballage pliable selon l'une quelconque des revendications 1 à 3, **caractérisé en ce que** la couche (a) de la feuille de polyoléfine présente, en tant que composant de polymère α), au moins un copolymère de propylène, de préférence un copolymère de propylène et d'éthylène comportant de préférence jusqu'à 20 % en poids d'éthylène.

5. Emballage pliable selon l'une quelconque des revendications 1 à 4, **caractérisé en ce que** la couche (a) de la feuille de polyoléfine présente, en tant que composant de polymère β), au moins un polyéthylène choisi dans le groupe comprenant des polyéthylènes basse densité (LDPE), des polyéthylènes linéaires basse densité (LLDPE), des copolymères métallocènes d'éthylène dotés d'au moins une α-oléfine en C₃₋₈ (PE métallocène) et des mélanges d'au moins deux des polymères mentionnés.

6. Emballage pliable selon l'une quelconque des revendications 1 à 5, **caractérisé en ce que** le composant de polymère β) de la couche (a) de la feuille de polyoléfine est constitué d'au moins un LLDPE ou d'un mélange de LDPE et de LLDPE ou d'un mélange de LDPE et de PE métallocène, la proportion du LLDPE respectivement du polyéthylène métallocène étant d'au moins 15 % en poids dans le mélange et le mélange présentant un point de fusion ≥ 113 °C.

7. Emballage pliable selon la revendication 6, **caractérisé en ce que** la résistance au déchirement de la feuille de polyoléfine est ≥ 0,18 N dans le sens machine (mesurée d'après la norme DIN 53356).

8. Emballage pliable selon l'une quelconque des revendications 1 à 7, **caractérisé en ce que** la couche superficielle (c) éventuellement présente de la feuille de polyoléfine est composée d'au moins un polyéthylène et/ou copolymère d'éthylène avec au moins une α-oléfine en C₃₋₈, de préférence est composée d'un mélange de LDPE et d'un LLDPE.

9. Emballage pliable selon l'une quelconque des revendications 1 à 8, **caractérisé en ce que** la feuille de polyoléfine présente un revêtement détachable (b) composé d'un polysiloxane durci aux UV ou durci thermiquement.

10. Emballage pliable selon l'une quelconque des revendications 1 à 9, **caractérisé en ce que** le rétrécissement de la feuille de polyoléfine dans le sens MD (sens machine) ou CD (sens transversal) mesuré d'après la norme DIN 55543 à 100 °C et 1 min dans un bain d'huile est ≤ 10 %.

11. Emballage pliable selon l'une quelconque des revendications 1 à 10, **caractérisé en ce que** l'emballage pliable est un emballage pliable détachable.

12. Emballage pliable selon la revendication 11, **caractérisé en ce que** l'emballage détachable est un emballage pour un article hygiénique emballé individuellement.

13. Emballage pliable selon la revendication 11 ou 12, **caractérisé en ce que** les articles hygiéniques sont des articles pour l'incontinence, des protège-slips ou des serviettes hygiéniques emballé(e)s individuellement.

14. Emballage pliable selon la revendication 13, **caractérisé en ce que** le produit hygiénique est autocollant.
